# EUROPEAN PATENT APPLICATION

(11) **EP 2 009 935 A1**
(43) Date of publication of application: **31.12.2008**
(21) Application number: 07110968.0
(22) Date of filing: 25.06.2007
(51) Int. Cl.: H04Q 7/26, H04Q 7/32

(54) **Docking station for receiving mobile stations and transferring calls to connected terminals/networks**

(71) Applicant: Esmolo AG, 3007 Bern (CH)
(72) Inventor: De Luca, Riccardo, CH-3084, Wabern (CH); Ruetti, Matthias, CH-3011, Bern (CH)
(74) Representative: Rutz & Partner

(57) **Abstract**

The method allows transferring signals, such as voice signals and/or user data, in an apparatus (1) between at least one subscriber's mobile station (MT1,MT2,...,MTn), which can be connected over a mobile telecommunications network (PLMN) to an external telecommunication terminal (MTx) of a third party, and at least one other telecommunication terminal (VT1,DT1;...) of said subscriber that is attached to another telecommunications network (DECT,IP,ISDN). According to the present invention, for a subscriber's mobile station (MT1) attached to the apparatus (1) a connection is set up between network modules (NM_{F1};NM_{M1}) provided in the apparatus (1) and in the mobile station (MT1) over a wireless network (WN1) such as Bluetooth, over which signalling information is exchanged between the mobile station (MT1) and a call control unit (CC) of the apparatus (1), which sets up a connection over a switching unit (SW) of the apparatus (1) and the other telecommunications network (DECT,IP,ISDN) to the other telecommunication terminal (VT1,DT1;...) of the subscriber, whenever the setup of a connection to the external telecommunication terminal (MTx) has been requested. Hence, for a subscriber's mobile terminal (MT1) attached to the apparatus (1), connections will be routed to and from the other telecommunication terminal (VT1,DT1;...) of said subscriber.

## Description

The present invention relates to a method and to an apparatus for transferring signals, such as voice signals and/or user data, between a subscriber's mobile station; which can be connected over a mobile telecommunications network to a telecommunication terminal of a third party; and a telecommunication terminal of said subscriber that is attached to another telecommunications network, such as a cordless communication network, an IP-network, e.g. the INTERNET, and/or a private or public telephone network PSTN/ISDN; or possibly a further wireless network.

### BACKGROUND OF THE INVENTION

Calls between subscribers, a calling party and a called party, may nowadays be performed in various ways. A call may be set up between terminals connected to a mobile telecommunications network PLMN; terminals connected to a public switched telephone network PSTN, e.g. the ISDN, terminals connected to a private branch exchange (PBX or PABX), terminals connected to a cordless communication system and terminals connected to a network operating according to the TCP/IP internetworking protocols. Of course it is also known to set up calls between different terminals across one or more of said networks.

Most popular and widespread are nowadays mobile stations that provide various features and functionalities such as the integration of high resolution cameras. However the disadvantages of the mobile phones require consideration as well.

Among researchers the high number of mobile phones has resulted in focus being placed on whether the use of the phones over longer periods can involve a health risk for the users. Some researchers are of the opinion that the radio waves, which stem from the mobile phones can, after long-time use, cause injury to the users' DNA and perhaps even cause cancer ailments.

Further, at his home or in the office, a subscriber normally prefers to use a more comfortable communication terminal, e.g. a key terminal that provides basic functionalities that are not provided by a mobile station.

In order to receive calls, that are directed to the mobile station MS, on a second communication terminal e.g. on a comfort telephone, in his office, a subscriber may use an expensive Call Forwarding Service provided by the operator of the mobile telecommunications network PLMN.

Further, the communication system disclosed in [1], EP 1 398 979 A1, allows the user to change between his mobile station and another telecommunication terminal, e.g. an IP-terminal, a conventional fixed station or a cordless terminal whenever desired. According to [1], when the mobile station is detached from the mobile telecommunications network PLMN, the second communication terminal is registered at the mobile telecommunications network PLMN in such a way that a request for routing information for the setup of a connection to the subscriber's mobile station, sent to the related Home Location Register HLR, will be answered with the address of an extended Mobile Services Switching Center to which the second communication terminal is attached.

Hence, the system disclosed in [1] avoids the use of the mobile station and the related radiation completely, when the subscriber has decided to use the second terminal. However, the solution disclosed in [1], requires modifications of the mobile telecommunications network PLMN.

Further, [1] describes dual mode terminals that are attached to the preferred network whenever possible. However dual mode terminals are higher in cost and must be correctly adapted to the individual networks that are used.

In order to avoid problems of dual mode terminals, [2], EP 0 849 965 A1, proposes to use a dual mode base station to which a mobile station and cordless terminal are connected. According to [2], the cordless terminal is connected via a DECT antenna and the mobile station is connected via an adapter to the base station, which is enabled to receive mobile radio signals that can then be converted into DECT signals that are transmitted to the cordless terminal via the DECT antenna. Receiving and processing mobile radio signals in the dual mode base station requires again considerable efforts. In addition, DECT-systems are restricted to small areas.

The present invention is therefore based on the object of providing an improved method and an improved apparatus for transferring signals, such as voice signals and/or data, between a subscriber's mobile station, that is operating in a mobile telecommunications network, to a telecommunication terminal of said subscriber that is attached to another telecommunications network, such as a cordless communication network, an IP-network, e.g. the INTERNET, and/or a private or public telephone network PSTN/ISDN; or possibly a further wireless network.

### SUMMARY OF THE INVENTION

The above and other objects of the present invention are achieved by a method and an apparatus as defined in claim 1 and claim 7 respectively.

The inventive method allows transferring signals in an inventive apparatus between at least one subscriber's mobile station, which can be connected over a mobile telecommunications network PLMN to an external telecommunication terminal of a third party, and at least one other telecommunication terminal of said subscriber that is attached to another telecommunications network.

According to the present invention, for a subscriber's mobile station, which is attached to the apparatus, a connection is set up between network modules provided in the apparatus and in the mobile station over a wireless network. Over this connection signalling information is exchanged between the mobile station and a call control unit, which sets up a further connection over a switching unit and the other telecommunications network to the other telecommunication terminal of the subscriber, whenever the setup of a connection to the external telecommunication terminal has been requested.

Hence, for a subscriber's mobile terminal attached to the apparatus, all connections will be routed to and from the other telecommunication terminal of said subscriber. The subscriber's mobile terminal can therefore be placed unattended in the apparatus while incoming or outgoing calls and/or data connections are routed to and from the other telecommunication terminal(s) of the subscriber. Hence, the subscriber will always be reachable through his mobile station while avoiding the disadvantages of mobile stations that were described above.

In a preferred embodiment, the subscriber may also set up outgoing connections via his terminal. However, the subscriber will preferably use other telecommunications networks to establish outgoing call connections, if these telecommunications networks provide additional features or can be used at reduced cost.

In a further preferred embodiment the connection from the subscriber's mobile station to the other telecommunication terminal is selected according to the required services such as voice communication or file transfer. Hence voice calls can be routed to the subscriber's voice terminal while data are routed to the subscriber's data terminal, e.g. via connections established for the file transfer. A call combining voice signals and data may be split and routed accordingly.

In a preferred embodiment, an audio channel is set up between the subscriber's mobile station and the call control unit, which extracts signalling information transferred within the audio data or signals received from the subscriber's mobile station. Based on the extracted signalling information, the call control unit sets up or releases a connection to the other telecommunication terminal. This embodiment, which provides basic functionality, can be realised advantageously with little effort.

In a further preferred embodiment a wireless network such as a Bluetooth network is set up for each mobile station that is attached to the apparatus by the related subscriber. Hence for each mobile station at least one connection is set up through a dedicated wireless network. Preferably the network modules comprise applications that allow the set up of more than one connection through the dedicated wireless network. Preferably the mobile station is registered with the related wireless network at an initial session, e.g. by pushing a button on the apparatus, preferably located in the related receptacle, with which the registration procedure is started.

As stated above the connections from the subscriber's mobile station to the subscriber's other terminal are routed as required by the subscriber. According to a further embodiment of the invention the apparatus, particularly for the routing of calls and user data, is programmed
a) by the supplier or manufacturer in the factory; and/or
b) individually, i.e. locally, by the subscribers through the mobile stations or the other telecommunication terminal that comprise at least one application program that is designed to communicate with a control program contained in the apparatus; and/or
c) centrally by the administrator, by means of a centralised server that comprises at least one application program that is designed to communicate with a control program contained in the apparatus.

Preferably the apparatus is programmable remotely for example via an IP - address. Thus the subscriber or administrator can access the apparatus from any location that is covered by an IP-network such as the Internet.

If the apparatus can individually be programmed by the subscribers, a higher flexibility and a reduction of centralised administrative efforts can be achieved.

With the inventive apparatus various additional features and services, such as message delivery through e-mail, voice-mail, etc., can be provided more easily, independently from the mobile communication network and its operator even at no cost. In a preferred embodiment, the content of a short message is transferred to an e-mail and forwarded to the related address.

In a further preferred embodiment the apparatus collects identification information received from the mobile stations and transfers this information to an administration server, which updates personal records or provides rights to the owner of the mobile station, such as grant of access, according to the received identification data. Hence, the mobile station can be used as a badge that is detectable by the administration server. Based on the collected identification data all administrative tasks can be performed, providing access to the premises or calculating the labour hours.

Hence, the inventive solution yields several advantages. The deposited mobile station is still operative and can even be recharged in the apparatus. However import of radiation into a building can be prevented if the apparatus is placed at the entrance of the building or apartment.

In a preferred embodiment the apparatus comprises a housing accommodating the network modules, the call control unit and preferably the switching unit, and further comprises receptacles for mechanically attaching the mobile stations to said receptacles, which preferably comprise plugs and connections to a charging unit.

In a further preferred embodiment the receptacles are extensions, such as fixed, flexible or extendable arms. Hence, the attached mobile stations can easily be mounted and are kept at a fixed or selectable distance from the modules of the apparatus, thus reducing interferences. Interferences, particularly those caused by emissions of the mobile stations, can further be reduced or completely avoided by a metallic shield preferably made of aluminum that covers the housing and separates the modules contained in the apparatus from the attached mobile stations. Hence the correct operation of the apparatus can be maintained even under an increased impact of radio waves.

In order to reduce the transmission power of the mobile stations the apparatus preferably comprises an antenna that is receiving and transferring signals of the mobile telecommunication network PLMN into the range of the receptacles. Hence, by using the antenna the mobile stations can maintain connections with reduced emission power at a higher quality and with a reduced impact on the modules of the apparatus.

In a further preferred embodiment each receptacle is designed in such a way that it is guiding and confining the radio waves of the related wireless network, thus reducing the emission into the environment possibly causing interferences in channels used by neighbouring devices.

As pointed out above the mobile stations can operate unattended in the apparatus. In order to secure the mobile stations when operating unattended in the apparatus, the mobile stations are preferably locked within the related receptacles. Hence, the apparatus is preferably provided with suitable locking means for each individual receptacle or mobile station. Locking means may be mechanically or electronically operated. A locking system may comprise finger print readers or may be actuated with a key.

### BRIEF DESCRIPTION OF THE DRAWINGS

Some of the objects and advantages of the present invention have been stated, others will appear when the following description is considered together with the accompanying drawings, in which:
- Fig. 1: shows an inventive apparatus 1 with attached mobile stations MT1, ..., MT4 operating as a private branch exchange;
- Fig. 2: shows a preferred embodiment of the inventive apparatus 1 in detail;
- Fig. 3: shows the inventive apparatus 1 of figure 1 with receptacles 11, ..., 14, each comprising a lock 111 for securing an attached mobile station MT;
- Fig. 4: shows the apparatus 1 in another design, with receptacles 11, ..., 13, that consist of extendable arms 112 and holders 115 with a door 111 for locking an inserted mobile station MT;
- Fig. 5: shows the apparatus 1 with the communication devices MT1, VT1, DT1 of a subscriber for whom a call connection has been established; and
- Fig. 6: shows the apparatus 1 of figure 5 with a preferred embodiment of the call control unit CC in detail.

### DETAILED DESCRIPTION OF THE PREFERRED EMBODIMENTS

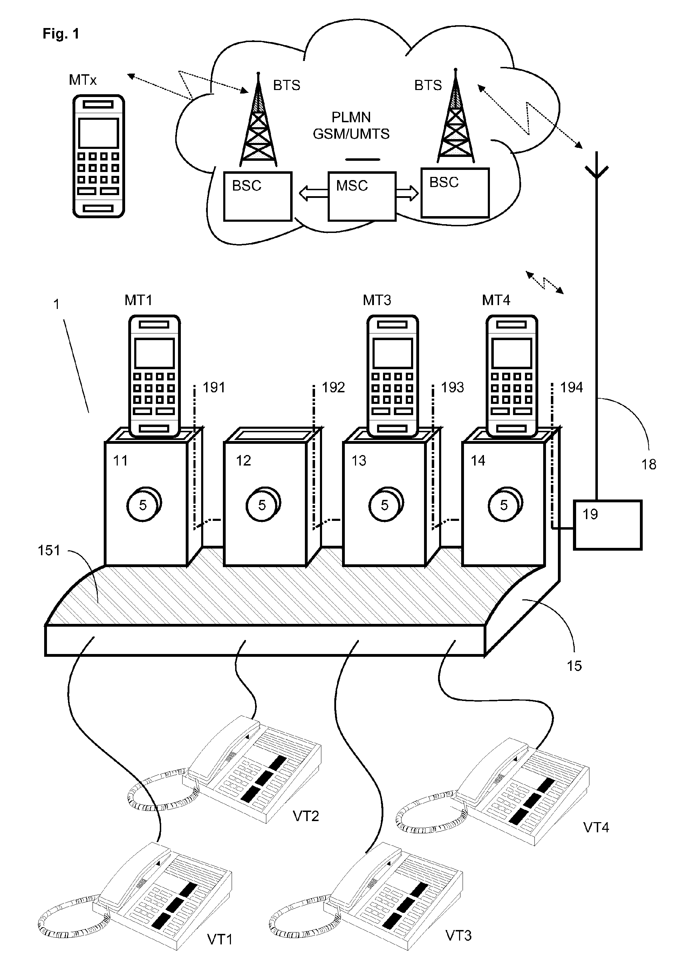

Figure 1 shows an inventive apparatus 1 with a housing 15 that comprises four receptacles 11, ... , 14 designed to receive mobile stations MT1, ..., MT4 that are mechanically attached to the apparatus 1 by the related subscribers. Preferably the receptacles 11, ... , 14 comprise plugs that are connected to a charger (not shown), so that a mobile station MT is recharged when it is attached to the apparatus 1.

As symbolically shown in figure 1 the mobile stations MT1, ..., MT4 are attached to a mobile telecommunication network PLMN that is operating according to corresponding standards such as GSM- or UMTS standards, which are briefly described in [1]. It is shown that the mobile station MT4 attached to the apparatus 1 is connected to an external mobile station MTx via two base stations BSC/BTS and a mobile services switching center MSC. The signals from the related base station BSC/BTS is received by an external antenna 18 that may be installed on the roof of a building and that is routed to the apparatus 1, which is preferably located at the entrance of a building. Hence the mobile stations MT attached to the apparatus 1 can send and receive signals via the external antenna 18 and thus can operate with minimal transmission power, thus avoiding interferences or disturbances with neighbouring devices. The apparatus 1 preferably comprises a distribution unit 19 containing an amplifier and a splitter. The distribution unit 19 can be connected on one side to the external antenna 18 and via cable connections on the other side to the mobile stations MT1, ..., MTn. Alternatively to the distribution unit 19, local antennas 191, ..., 19n can be provided. The latter antennas are connected, within the receptacles 11, ..., 1n, to a connector or to a socket that can be connected to the mobile stations MT.

Further the receptacles 11, ..., 14 are formed as columns or arms allowing the attachment of the mobile stations MT1, ..., MT4 at a distance above the main body of the apparatus 1, which contains the electronic circuitry that will be explained below. Hence, the advantages of the columns or arms are manifold. The placement of the mobile stations MT is facilitated, the interferences are significantly reduced and a creative design is realised.

In order to further reduce the interferences a metallic shield 115, preferably made of aluminum, covers the housing 15 and further separates the modules CC, SW contained in the apparatus from the attached mobile stations MT. Hence, the correct operation of the apparatus can be maintained even under an increased impact of radio waves, e.g. when the full capacity of the apparatus 1 is used. Interferences that may affect the system functionality are thus avoided.

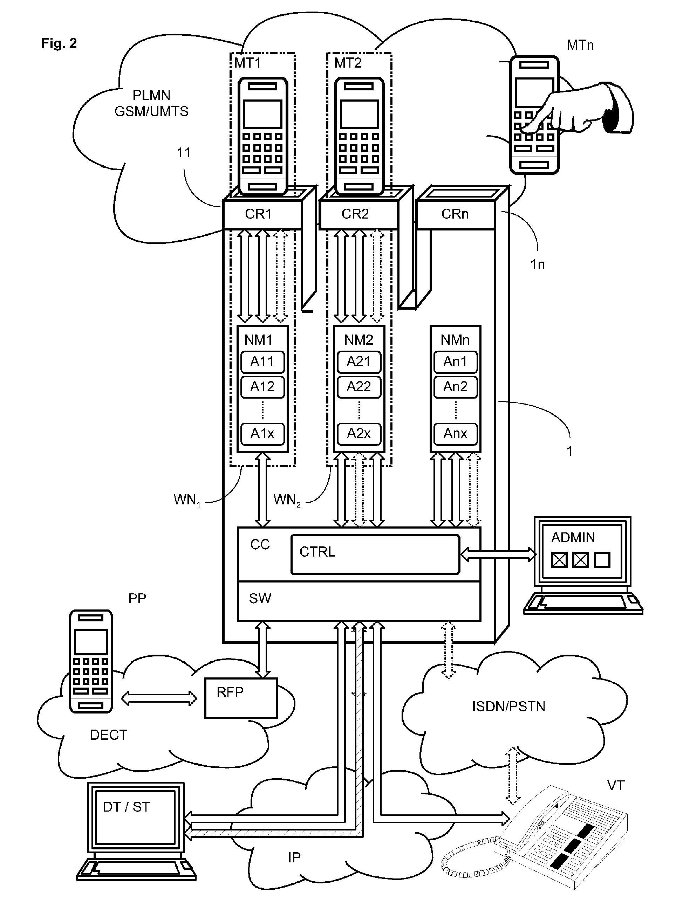

Further, the apparatus 1 is connected to comfort terminals (key terminals) VT1, ..., VT4 and programmed in such a way that predetermined routes between the mobile stations MT1, ..., MT4 and the key terminals VT1, ..., VT4 will be established, whenever a call to an external station, e.g. mobile station MTx, must be set up via an attached mobile terminal MT. For this purpose the apparatus 1 comprises a switching unit SW (see figure 2) that has been programmed accordingly. However, the apparatus 1 can be connected to an external switching unit PBX as well. Hence the apparatus 1, i.e. the invention can be integrated into a private branch exchange PBX or be connected to a private branch exchange PBX.

In figure 1 a connection is set up between the external mobile terminal MTx and the key terminal VT4 via the attached mobile terminal MT4, which relate to the same subscriber. Hence, as soon as an owner has attached his mobile terminal MT4 to the apparatus 1 he will receive calls incoming on his mobile terminal MT4 at the key terminal VT4, e.g. in his office. From the key terminal VT4 the subscriber can also set up calls via his mobile terminal MT4 to the external terminal MTx.

The apparatus 1 shown in figure 1 comprises a switching unit that routes the call to the key terminals VT1, ..., VT4. In further preferred embodiments the number of receptacles 11, 12, ..., 1n that can receive mobile stations MT1, ..., MTn can be selected as required by the users. Still further the number of the other telecommunication terminals VT1, DT1; ... to which a mobile station MTn can be connected can be selected according to the user's requirements as well. Still further, two or more inventive apparatuses may use an external switching unit PBX, through which all traffic is routed.

Figure 2 shows a preferred embodiment of the inventive apparatus 1 in detail. The apparatus comprises n receptacles (the number is not limited and can be up to hundreds) that preferably comprise chargers or plugs CR1, ..., CRn that are connected to a charger. The plugs CR1, ..., CRn plugs are preferably are exchangeable so that a user can mount a suitable unit.

The apparatus 1 further comprises network modules NM1, ..., NMn that individually correspond to network modules NM_{M} contained in the mobile stations MT1, ... , MTn. As symbolically shown, dedicated wireless networks WN1, ...., WNn can be set up by means of said network modules NM1, ..., NMn; NM_{M}, serving as communication channels between the attached mobile stations MT1, ... , MTn and at least one call control unit CC provided in the apparatus 1. As further shown in figure 2, the network modules NM1, ..., NMn preferably contain several application modules A11, A12, ..., A1x; ....; An1, An2, ..., Anx that allow the setup of n-channels over each individual wireless network WN1, ... ., WNn , under the condition that the network modules NM_{M} contained in the terminals contain corresponding modules.

Preferably the network modules NM1, ..., NMn; NM_{M} operate according to the Bluetooth standards, which are described in [3], US 2002/0120750 A1. Further described in [3] are protocols for service discovery and salutation that enable the retrieval of service information from the counter part that can, in turn, be used to configure the stack to support several end-user applications.

Further, a method for transferring data flows between two Bluetooth devices is described in [4], US 2005/0261007 A1. According to [4] two Bluetooth devices are connected via a Bluetooth Network Encapsulation Protocol data connection via dedicated Logical Link Control and Adaptation Protocol (L2CAP) channels. The method basically comprises detecting a data flow to be transferred and is characterized by detecting a quality of service requirement of said data flow, and establishing a L2CAP channel dedicated for said data flow, wherein said L2CAP channel meets at least said detected QoS requirement. The solution disclosed in [4] allows setting up more than one channel.

Hence, with the solutions disclosed in [3] and [4] it is possible to perform discovery and to use the provided services over more than one channel. For the present invention the services provided primarily relate to the transfer of voice signals and user data.

In a preferred embodiment each receptacle 11, ... , In is designed in such a way that it is guiding and confining the radio waves of the related wireless network NW, thus reducing the emission into the environment. The columns or arms of the receptacle 11, ..., 1n are preferably designed as waveguides that are adapted to the frequencies used in the wireless network NW. Alternatively, antennas may suitably be arranged such that an optimal communication with a minimum of transmission power is obtained.

For the normal use preferably only one mobile terminal MT is assigned to a single receptacle 11, ..., 1n. For registering of the mobile station MT, the network modules NM1, ..., NMn; NM_{M} in the mobile station MT and in the apparatus 1 are activated. Preferably a button 5 is provided on each receptacle 11, ..., 1n, with which the registration procedure is started. Hence, the network module NMn is ready to accept the registration of a mobile station MTn. After the registration has been completed, the network module NM_{M} is selectively setting up a connection with the registered mobile station MTn only, i.e. the network module NMₙ contained therein. Then, the apparatus 1 can receive and preferably establish calls via the registered and attached mobile station MTn.

The routing from the receptacle 1n, i.e. the mobile station MTn and the related network modules NMn; NM_{M} can be programmed in various ways, e.g. from the mobile station MTn or a fixed terminal VTn, DTn of the subscriber or by an administrator by means of his data terminal ADMIN, e.g. a personal computer that is connected via the Internet or a LAN to the apparatus 1. In figure 2 the user can program the apparatus 1, i.e. the switching unit SW by means of his data terminal DT/ST.

The apparatus 1 can be programmed that a call from the mobile station MTn placed in receptacle In is routed to any terminal VT, DT in any desired network, e.g. via a radio fixed part RFP to the portable part in a cordless communication system (e.g. a DECT system), to a voice-over-IP-terminal or to a data terminal connected to an IP network, or to a key telephone connected to a public network PSTM/ISDN. Hence, a subscriber can deposit his mobile station MT in an apparatus 1 at the entrance of a building and receive calls in any room of the building. Further the subscriber can route the calls over the Internet to any destination.

For this purpose the apparatus comprises a call control unit CC or a plurality of call control units CC (one per receptacle) and an internal or external switching unit SW such as a PBX/PABX. In a common call control unit CC a program CTRL may preferably be provided that collects identification data from the attached mobile stations MT and transfer said data to the administrator's terminal ADMIN indicating the presence of the subscribers. Hence, the mobile stations MT may be used as a badge for security purposes and/or for accounting purposes. On the screen of the terminal ADMIN it is symbolically shown that the presence of the owners of the mobile stations MT1 and MT2 has been registered.

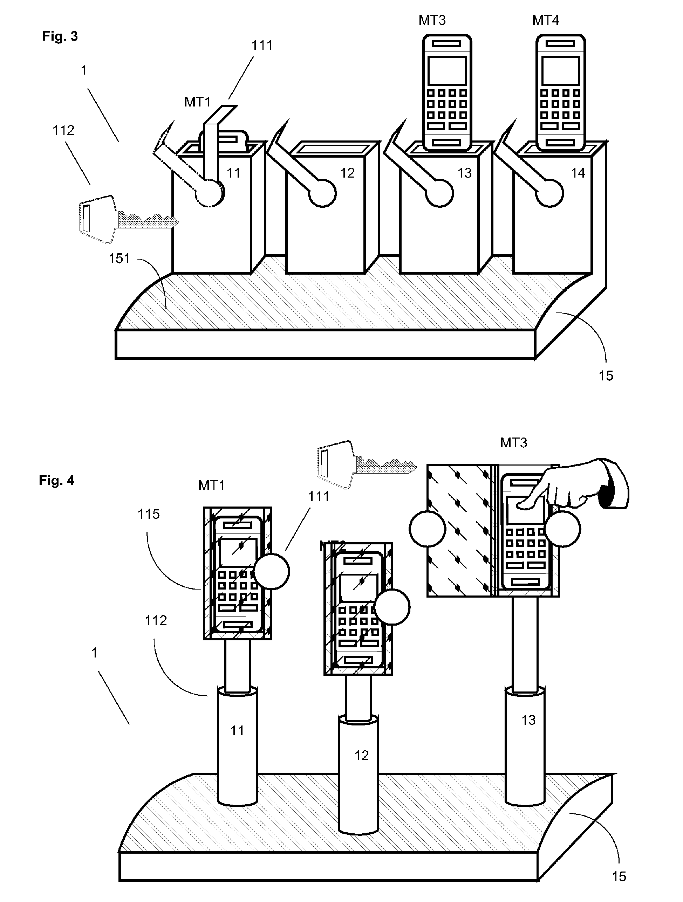

Figure 3 shows the inventive apparatus 1 of figure 1 with receptacles 11, ..., 14, comprising a lock 111 for securing an attached mobile station MT, which then can be left unattended, e.g. in the range of the reception of a company building or a hotel. The lock may be a simple lever 111 that is operated by a key 112.

Figure 4 shows the apparatus 1 in another design, with receptacles 11, ..., 13, that consist of extendable arms 112 and holders 115 with a door 111 for locking a mobile station MT inserted into the holder 115.

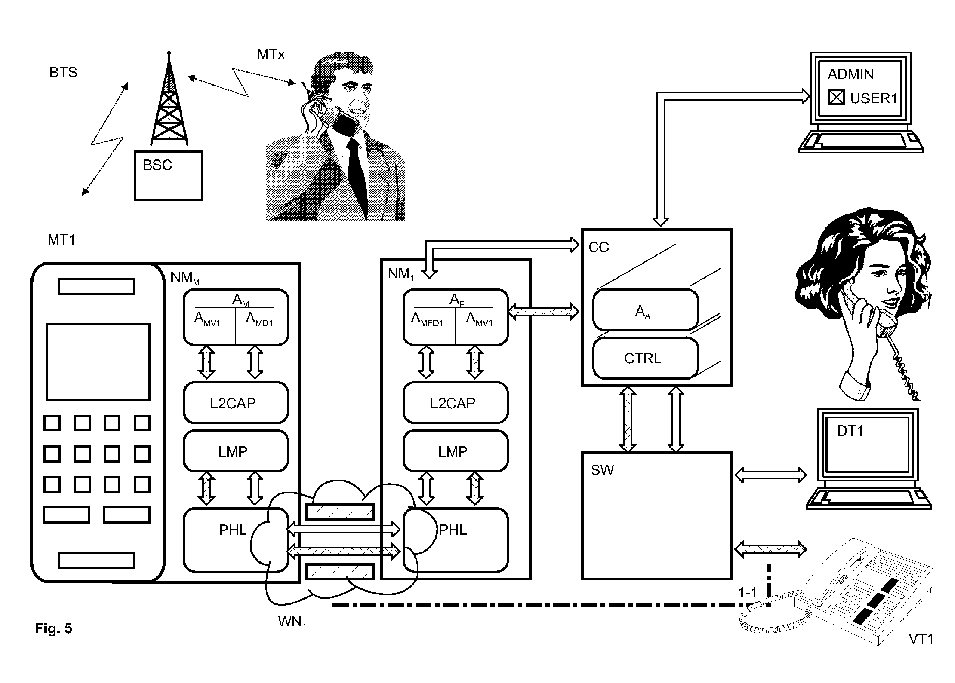

Figure 5 shows one of the sections 1-1, 1-2, ..., 1-n of the apparatus 1 with the communication devices MT1, VT1, DT1 of a subscriber for whom a call connection has been established to an external terminal MTx. Figure 5 shows in particular the block diagrams of the network modules NMn; NM_{M} which operate according to the Bluetooth standards. The Bluetooth protocol stack, which is depicted in [3], figure 1 comprises Bluetooth Core Protocols such as Base band and Link Controller Protocols, a Link Manager LMP, Logical Link and Adaptation Protocol L2CAP which together with a radio part PHL support the applications A_{M}, A_{F} and/or application modules A_{MV1}, A_{MD1;} A_{FD1}, A_{FV1} which support various services such as voice traffic or file traffic, e.g. the transfer of pictures taken, or even synchronisation purposes, e.g. updating the Outlook ® database of the subscribers data terminal DT1.

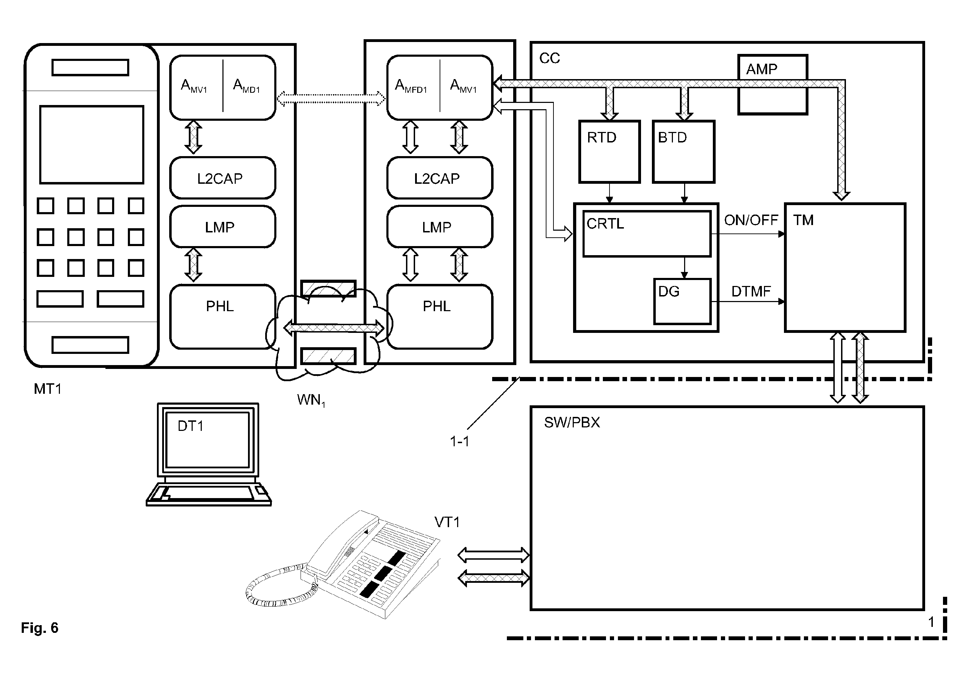

Figure 6 shows the apparatus 1 of figure 5 with a preferred embodiment of the call control unit CC shown in detail. By means of the network modules NMn; NM_{M} an audio channel can be set up and monitored in the call control unit CC by means of a ringing tone detector RTD and a busy tone detector BTD. This allows a control unit CTRL to extract signalling information, which is required for the setup or the release of a connection, e.g. between the mobile station MT1 and the key terminal VT1 shown in figure 6, by means of a terminal module TM. In the event that a ringing signal is detected, the control unit CTRL activates a terminal module TM, which transfers the audio channel that is arriving from an optional amplifier AMP to the switching unit SW. Further, a pre-programmed signal generator DG is activated that forwards DTMF signalling information, representing the address of the key terminal VT1, to the terminal module TM. Hence, the switching unit SW can use said address information for setting up the call to the key terminal VT1. If one of the parties terminates the call, a busy tone will be detected in the audio channel allowing the control unit to release the connection.

### REFERENCES

[1] EP 1 398 979 Al
[2] EP 0 849 965 Al
[3] US 2002/0120750 Al
[4] US 2005/0261007 Al

## Claims

1. A method for transferring signals, such as voice signals and/or user data, in an apparatus (1) between at least one subscriber's mobile station (MT1, MT2, ..., MTn), which can be connected over a mobile telecommunications network (PLMN) to an external telecommunication terminal (MTx) of a third party, and at least one other telecommunication terminal (VT1, DT1; ...) of said subscriber that is attached to another telecommunications network (DECT, IP, ISDN), **characterised in that** for a subscriber's mobile station (MT1) attached to the apparatus (1) a first connection is set up between network modules (NM_{F1}; NM_{M1}) provided in the apparatus (1) and in the mobile station (MT1) over a wireless network (WN1), over which signalling information is exchanged between the mobile station (MT1) and a call control unit (CC), which sets up a second connection over a switching unit (SW) and the other telecommunications network (DECT, IP, ISDN) to the other telecommunication terminal (VT1, DT1; ...) of the subscriber whenever the setup of a connection to the external telecommunication terminal (MTx) has been requested.

2. A method according to claim 1, **characterised in that** the connection from the subscriber's mobile station (MT1) to the other telecommunication terminal (VT1, DT1; ...) is selected according to the required services such as voice communication or file transfer.

3. A method according to claim 1 or 2, **characterised in that** an audio channel is set up between the subscriber's mobile station (MT1) and the call control unit (CC), which extracts signalling information transferred within the audio data received from the subscriber's mobile station (MT1) based on which a connection to the other telecommunication terminal (VT1, DT1; ...) is set up or released.

4. A method according to claim 1, 2 or 3, **characterised in that** a wireless network (WN₁; ...) such as a Bluetooth network is set up for each mobile station (MT1, MT2, ..., MTn) that is attached to the apparatus (1) by the related subscriber.

5. A method according to one of the claims 1 to 4, **characterised in that** the apparatus (1), particularly for the routing of calls and files, is programmed
a) by the supplier or manufacturer in the factory; and/or
b) individually, i.e. locally, by the subscribers through the mobile stations or the other telecommunication terminal that comprise at least one application program that is designed to communicate with a control program contained in the apparatus; and/or
c) centrally by the administrator, by means of a centralised server that comprises at least one application program that is designed to communicate with a control program contained in the apparatus.

6. A method according to one of the claims 1 to 5, **characterised in that** the apparatus (1) is collecting identification information from the mobile stations (MT1, MT2, ..., MTn) which are transferred to an administration server (ADMIN) which updates personal records according to the received identification data.

7. A method according to one of the claims 1 to 6, **characterised in that** for a message, particularly a short message (SMS), received by the mobile stations (MT1, MT2, ..., MTn)
a) an alarm signal is forwarded to the other telecommunication terminal (VT1, DT1; ...) of the related subscriber; or
b) the information content is extracted from the message and transferred within another message format such as an e-mail to the other telecommunication terminal (VT1, DT1; ...) of the related subscriber.

8. Apparatus (1) operating according to a method as defined in one of the claims 1 to 7, for transferring signals, such as voice signals and/or user data, between at least one subscriber's mobile station (MT1, MT2, ..., MTn) designed to operate in a mobile telecommunication network (PLMN), and at least one other telecommunication terminal (VT1, DT1; ...) of said subscriber that is attached to another telecommunications network (DECT, IP, ISDN), **characterised in that** the apparatus (1) comprises network modules (NM_{F1}, ...), each being adapted to communicate with network modules (NM_{M}) wireless implemented in the related attached mobile station (MT1; ...) in order to set up an individual wireless network (WN1), and with a call control unit (CC) that is designed to extract signalling information in order to set a connection between the mobile station (MT1; ...) and, over a switching unit (SW) and the other telecommunications network (DECT, IP, ISDN), the other telecommunication terminal (VT1, DT1; ...).

9. Apparatus (1) according to claim 8, **characterised in that** the call control unit (CC) designed to extract information identifying the required service and to set up a connection to the related other telecommunication terminal (VT1, DT1; ...) accordingly and/or that the call control unit (CC) is designed to extract signalling information out of an audio channel that has been established over the wireless network (WN1), by means of modules such as a ringing tone detector (RTD) or a busy tone detector (BTD).

10. Apparatus (1) according to claim 8 or 9, **characterised in that** the network modules (NM_{F1}, ...; NM_{M}) operate according to Bluetooth protocols.

11. Apparatus (1) according to claim 8, 9, and 10, **characterised in that** the call control unit (CC) comprises a signal generator (DG) and a control unit (CTRL) that are designed to operate a terminal module (TM) over which the connection from the attached mobile station (MT1; ...) to the related other telecommunication terminal (VT1, DT1; ...) is set up or released.

12. Apparatus (1) according to one of the claims 8 to 11, **characterised in that** the switching unit (SW) is integrated within the apparatus (1) and is serving all attached mobile stations (MT1; ...) via individual call control units (CC1, ...) or a common call control unit (CC).

13. Apparatus (1) according to one of the claims 8 to 12, **characterised in that** the apparatus comprises a housing (15) accommodating the network modules (NM_{F1}, ...), the call control unit (CC) and preferably the switching unit (SW) and comprising receptacles (11, 12, .., 1n) for mechanically attaching the mobile stations (MT1, MT2, ..., MTn), said receptacles (11, 12, .., 1n) preferably comprising connections to a charging unit.

14. Apparatus (1) according to claim 13, **characterised in that** the receptacles (11, 12, ..., 1n) are extensions, such as fixed, flexible or extendable arms and/or that the housing is covered by a metallic shield (151) preferably made of aluminium, said metallic shield (151) separating the modules (CC, SW) contained in the apparatus (1) from the attached mobile stations (MT1, MT2, ..., MTn).

15. Apparatus (1) according to claim 13 or 14, **characterised in that** the apparatus (1) comprises an antenna (18) receiving and transferring signals of the mobile telecommunication network to the receptacles (11, 12, ..., 1n) .

16. Apparatus (1) according to claim 13, 14 or 15, **characterised in that** each receptacle (11; 12; ...; 1n) is guiding and confining the radio waves of the related wireless network (WN1, ... .).

17. Apparatus (1) according to one of the claims 13 to 16, **characterised in that** each receptacle (11, 12, ..., 1n) comprises a mechanical lock (111) that can be operated mechanically and/or electronically by the related user only.
